Europäisches Patentamt

European Patent Office

Office européen des brevets

(19)

(11) Publication number: **0 138 603**
**A2**

(12) # EUROPEAN PATENT APPLICATION

(21) Application number: **84307031.9**

(22) Date of filing: **15.10.84**

(51) Int. Cl.⁴: **F 16 L  59/16, E 21 B  17/04,
E 21 B  17/00, E 21 B  17/10,
E 21 B  37/02, B 23 K  20/12**

(30) Priority: **13.10.83 GB 8327466
14.10.83 GB 8327644
15.10.83 GB 8327678
21.10.83 GB 8328209**

(43) Date of publication of application: **24.04.85
Bulletin 85/17**

(84) Designated Contracting States: **AT BE CH DE FR GB IT
LI LU NL SE**

(71) Applicant: **Texas Forge & Tool Limited, Brittanic
Chambers Thorpe Road, Norwich NR1 1RY (GB)**

(72) Inventor: **North, John Herbert, Overlea Stocks Lane
Bolfield, Norwich Norfolk (GB)**

(74) Representative: **Sturt, Clifford Mark et al, MARKS &
CLERK 57-60 Lincoln's Inn Fields, London WC2A 3LS
(GB)**

(54) Improvements in or relating to rods and pipes.

(57) Improvements in or relating to rods and pipes with particular but non limiting application to the oil pumping industry. One aspect includes insulated tubing and couplings thereof wherein the thermal insulation is improvided. An advantagous arrangement uses a vacuum to improve the insulation.

There is particularly described coupling means for coupling first and second lengths of insulating tubing which include respective inner (13) and outer (1) spaced tubes defining an inter-tube space (16) therebetween characterised by the coupling means comprising respective first and second coupling portions (26, 27) which are coupleable to form an inner tube seal (6) and an outer tube seal (6) which seals (6) are spaced from one another.

Also descirbed is thermally insulated fluid transfer tubing comprising first (1) and second (13) tubes arranged one within the other characterised by the space (16) between them being evauacted.

Further disclosed are improvements in heavy wall pipe wherein thin wall pipe is welded to thick wall pipe (40). In particular, a method of making a heavy walled pipe characterised by the steps of providing a shaped section of pipe (40) having comparatively thick walls, providing two lengths of pipe having comparatively thin walls, and welding the lengths of pipe to respective ends of said shaped section (40).

Additionally there are disclosed improvements in paraffin scrapers particularly in providing a full circumference scraping action under axial movement alone. There is described a paraffin scraper (51) for scraping the inner surface of a pipe comprising a substantially cylindrical body having an oil passage (54) for axial passage of oil characterised by radially outwardly disposed blade means (53) arranged so that the inner surface of the pipe may be scraped around its full circumference by axial movement of the scraper (51).

1

## IMPROVEMENTS IN OR RELATING TO RODS AND PIPES

The present invention relates to rods and pipes and provides improvements which find application to, but which are not necessarily restricted to, use in oil production wells.  In particular the invention relates to insulated tubing, to a method of making heavy wall pipe and to a paraffin scraper for attachment to a rod or pipe.

One aspect of the present invention relates to insulated tubing, such as tubing down which steam may pass to heat up viscous oils in oil production wells.

Viscous crude oils are difficult to pump up and thus it is often necessary to heat them so that they become less viscous.  This is most conveniently carried out by passing steam down the well.  However, the distance is great and with a normal silica cement liner what was 100% steam at the well head becomes 75% to 80% steam down hole.

Attempts have been made to insulate the tubing down which the steam is passed, but these have not been entirely successful.  The basic principle of a double

2

coaxial tube having its outer annulus filled with insulation material and/or inert gas is known and works well to a point. The problem arises in that tubes for down hole use are provided in relatively short lengths and thus there are a great many connections between tubes. Hitherto, it has been conventional to weld the inner and outer tubes together at the connection to form an enclosed annulus containing the insulating material. The ends are usually prepared by upset flaring of the inner tube to a diameter equal to that of the outer tube and welding them together. The two tube ends are externally threaded and joined together by a known buttress coupling.

There is thus an area at each connection between two adjacent tubes where the inner tube is not insulated and the steam contained therein may be cooled at these many points. Attempts have been made to smooth the passage of steam down such tubes by providing an insert to cover this gap in the insulation, but this has little effect on the heat retention.

According to a first aspect of the present invention, there is provided coupling means for coupling first and second pieces of insulating tubing which include respective inner and outer spaced tubes defining an inter-tube space therebetween characterised by the coupling means

3

comprising respective first and second coupling portions which are coupleable to form an inner tube seal and an outer tube seal which seals are spaced from one another.

Advantageously, the inner and outer tubes are so joined together at their ends as to permit communication between adjacent inter-tube spaces. Alternatively each length may have a sealed inter-tube space.

The inter-tube space is adapted to contain or act as thermal insulation means. Said means may comprise a vacuum within the inter-tube space. Preferably the outer tubes are correspondingly screw-threaded for engagement with the other.

The outer tubes may engage one another by connection between overlapping portions thereof, said connection preferably being a screw threaded connection. Advantageously in this case, the ends are provided with pin and box type screw-threaded couplings. Alternatively, the outer tubes may engage one another by means of a collar engaging a shoulder of one tube and a screw thread to the other.

Either one of the ends may be provided with an annular channel in its end face, the channel communicating with the inter-tube space of that length by at least one aperture. The corresponding end of the adjacent tube

4

may be provided with at least one aperture adapted to connect its inter-tube space with said annular channel where the ends are connected.

There are preferably provided a plurality of apertures in each end, for example eight.

In the embodiment where the lengths are connected one to another by means of a collar, it is not necessary to provide a channel since the lengths can be aligned exactly by rotation of the shouldered tube with respect to the collar. In this embodiment, each inter-tube space is provided with at least one aperture in each end face, said aperture being alignable by rotation of one of the lengths with respect to the other.

The tubing may comprise two tubes of different diameter, each friction-welded to a preformed connector at each of their ends.

In one embodiment the preformed connector is a pin-type connector at one of the ends of the length and a box-type connector at the other. In another embodiment, the preformed connector comprises a pair of matable ends, one of which is externally screw threaded and the other of which has an external shoulder adapted to co-operate with an internally screw threaded collar.

5

According to a second aspect of the present invention, there is provided thermally insulated fluid transfer tubing comprising first and second tubes arranged one within the other characterised by the space between them being evacuated.

Preferably, each such pair of tubes may be connected to an adjacent such pair of tubes to allow fluid to flow within the inner of the tubes and communication of vacuum along the inter-tube spaces.

Advantageously, a vacuum pump is provided at the well head for maintaining the vacuum to the depth of the well.

In one aspect the present invention relates to a method of making heavy wall pipe. A particular but nonlimiting application is a method of making a drill pipe having an intermediate portion with thickened walls to act as a wear pad.

Such drill pipes are well-known and are especially useful where directional drilling is to take place, although they may be used in many other applications. Hitherto, difficulty has been experienced in providing the intermediate section of thickened wall. Since it is to act as a wear pad, the material of which that section must be made is by its nature non-flexible. However, attempts have been made to provide snap-on rubber

6

jackets, wrap-around rubber jackets and rubber jackets which are moulded in situ. These all suffer from the disadvantage that they have no, or little abrasion resistance.

It has also been suggested to provide a metal sleeve of two semi-annular parts or a slide-on metal sleeve. These need to be fixed in place and one method of this has been welding. This may cause deterioration of the underlying material and /or stress concentration at the ends of the sleeve when the pipe bends. Either of these may cause failure of the pipe. Alternatively, such a section can be fixed in place by adhesive, for example epoxy adhesive, which gives a very strong bond. However, it is possible that due to surface conditions, or conditions down hole, the adhesive does not hold the section against the great forces applied to it. In such a case, the wear pad may become twisted loose upon the drill pipe and/or slide along it from the middle of the pipe towards a tool joint at one end of the pipe. In such a location it is almost useless.

Another method of providing such a section is to provide a pipe having a thick wall along its entire length and to machine the pipe to a thinner wall in the regions between the wear pad and the ends. This method of course has the problems of high initial cost of a thick-walled tube in addition to the cost of turning

0138603

7

down the large diameter tube to provide a pipe of the desired wall thickness, flexibilty and weight. Attempts have been made to improved on this method by providing a thin-walled pipe, upsetting it at an intermediate location and machining the upset to the desired shape. Couplings can then be welded to the ends. However, this method still suffers from the additional costs and difficulty of the upsetting step and also the machining costs.

It is an object of one aspect of the present invention to provide a method of making heavy wall pipe which mitigates the above disadvantages.

According to one aspect of the present invention, there is provided a method of making a heavy-walled pipe characterised by the steps of providing a shaped section of pipe having comparatively thick walls, providing two lengths of pipe having comparatively thin walls, and welding the two lenghts of pipe to respective ends of said shaped section.

The preferred method of welding is friction welding, although flash butt welding or induction welding may be employed.

8

Preferably, two lengths of pipe are provided by cutting a single pipe, the single pipe being provided with a coupling member at each end before the step of cutting it into two. In the alternative case where two separate short pipes are provided, a coupling member is provided on each short pipe and the ends without a coupling member are welded to the shaped section.

Alternatively, the shaped section may be welded to two part pipes or short pipes, which step is followed by an additional step of welding a coupling member to each end of the integral pipe so formed.

According to a further aspect of the present invention, there is provided an apparatus for use the method of the first aspect of the invention characterised in that said apparatus comprises a friction-welding machine having a hollow spindle to accomodate a length of pipe passing therethrough.

A further aspect of the present invention relates to a paraffin scraper for attachment to a sucker rod or other rod or pipe to maintain the walls of a production pipe clear of paraffin and other solid build-ups.

It is known to provide paraffin scrapers for attachment to sucker rods, which scrapers have a number of blades projecting from the rod to contact the walls of the

9

production pipe or at least approach the walls sufficiently so that the natural movement of the rod away from the centre of the pipe causes such contact. It is, of course, necessary to leave channels between the blades through which the upflowing oil may pass. For ease of manufacture, it has always been conventional that the blades are arranged parallel to the longitudinal axis of the sucker rod. This enables them to be moulded with no difficulties posed by undercut surfaces. However, such paraffin scrapers have the disadvantage that the areas of the wall opposite the oil-flowing channels are not scraped during the normal up and down receiprocatory movement of the sucker rod. In order to overcome this disadvantage, it is necessary to rotate either each scraper or the entire rod. Rod rotators have been developed, but their use adds a degree of complexity to the operation which would be better avoided.

It is an object of the present invetion to mitigate the above disadvantages and provide a paraffin scrapper which can scrape the entire circumference of the production pipe wall by making only vertical receiprocatory movements.

According to one aspect of the present invention, there is provided a paraffin scraper for scraping the inner

10

surface of a pipe comprising a substantially cylindrical body having an oil passage for axial passage of oil characterised by radially outwardly disposed blade means arranged so that the inner surface of the pipe may be scraped around its full circumference by axial movement of the scraper.

The blade means preferably comprises a plurality, for example three, of parallel blades separated one from another by a respective one of a corresponding plurality of helically extending channels, each blade encircling a part of said circumference.

Advanteously, one end of one blade occupies the same angular position on the circumference as the other end of the next adjacent blade.

The scraper may be moulded in a number of mateable parts, preferably two. There may be provided detent or lockable means to join the two or more parts. Additionally, or alternatively, adhesive may be used to join the parts.

The scraper is prefereably constructed of aluminium or plastics material, for example, nylon or polphenylene sulphide resin.

Embodiments of the various aspect of present invention will now be more particularly described by way of example only and with reference to the accompanying drawings, in which:

Figure 1 is an axial cross-section through two lengths of insulated tubing in the region of their coupling;

Figure 2 is a radial cross-section showing the coupling;

Figure 3 shows an axial cross-section a well head steam injector and vacuum ejector cap;

Figure 4 shows in axial cross-section a blanking tube for closing off the lower end of a string of insulated tubing according to one aspect of the invention;

Figure 5 is an axial cross section in the coupling region through another embodiment of insulated tubing;

Figure 6 is a radial cross section showing the coupling illustrated in Figure 5;

Figure 7 shows a variant of the vacuum connection illustrated in Figure 5;

Figure 8 shows a view, part in side elevation and part in cross-section, of a drill-pipe according to one aspect of the invention;

0138603

12

Figure 9 shows variants, each partially in side elevation and partially in cross-section, of drill-pipes according to one aspect of the invention;

Figure 10 shows in side elevation six drill-pipes according to one aspect of the invention, each having a different form of wear pad at an intermediate position;

Figure 11 shows another drill pipe manufactured by a method according to one aspect of the the invention;

Figure 12 is a side view of a scraper according to one aspect of the invention in place on a rod;

Figure 13 is a plan view of the scraper;

Figure 14 is a sectional view of a scraper similar to that shown in Figure 12 showing a preferred locking arrangement; and

Figure 15 is a sectional view taken along the line X-X' of Figure 14.

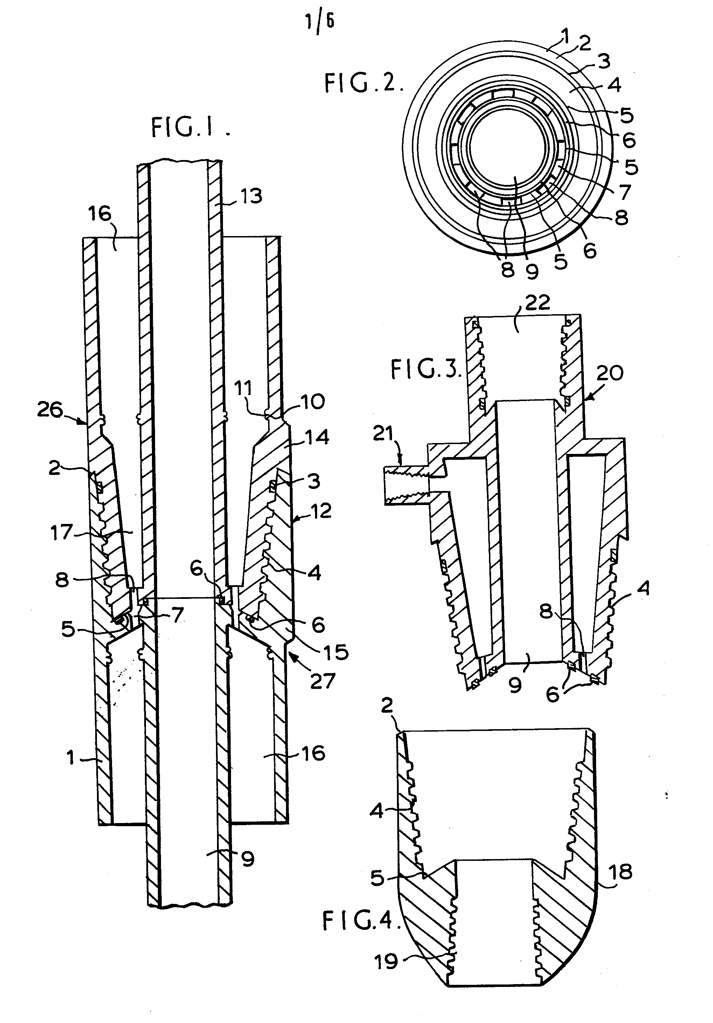

Referring now to the drawings, there is shown in Figure 1 a connection between two lengths of insulated tubing. At the left-hand side of figure 1, as viewed in figure 1, is shown a coupling with a flush outside diameter, while on the right-hand side of figure 1 is shown a coupling with a thickened pin and box type coupling 12.

13

Each length of tubing comprises a larger diameter outertube 1 and a smaller diameter inner tube 13 arranged substantially coaxially and friction-welded at their ends, along line 10, to a coupling piece formed in two opposed coupling portions 26,27. Reference 11 indicates the weld flash which is allowed to remain at those sides of the welds facing the inter-tube space, but removed from the exterior of the outer tube and from the interior of the inner tube.

The end of one length is connected to coupling portions 26 including a pin-type coupling 14 which co-operates with a box type coupling 15 at the corresponding end of the adjacent length. The couplings are connected by means of a modified buttress thread 4 having at one end a 45° torque shoulder 2 and at the other a 60° metal to metal seal 5. A seal ring 3 is provided at an intermediate point of the modified buttress thread 4. When the coupling is screwed fully home, the ends of the inner tube 13 abut one another sealingly to form a continuous bore 9 down which steam may be passed. The steam is insulated from external influences by a vacuum created within the inter-tube space 16.

As can be seen, the modified buttress thread 4 is so angled that a space 17 is left between it and the outer wall of the inner tube 13. Thus the vacuum insulation covers substantially the whole surface of the inner tube 13.

It is necessary to maintain communication between inter-tube spaces 16 of adjacent lengths in order to maintain the vacuum throughout the length of the tubing string. This is accomplished by means of an annular channel 7 in an end face of the box-type coupling 15 (although it could equally well be in the pin-type coupling), which channel communicates with the inter-tube space 16 of its length of tubing by means of, in this case, eight apertures 8. These apertures 8 are spaced equi-angularly around the channel 7. The corresponding pin coupling also has a number of apertures of similar dimensions and these are so positioned that when the two lengths are screwed together, the apertures 8 in the pin coupling connect the reduced inter-tube space 17 to the channel 7. Thus, whatever the radial alignment of the lengths of tubing, communication between inter-tube spaces is maintained. Annular seals 6 are provided, one either side of the channel, to prevent loss of vacuum at these points.

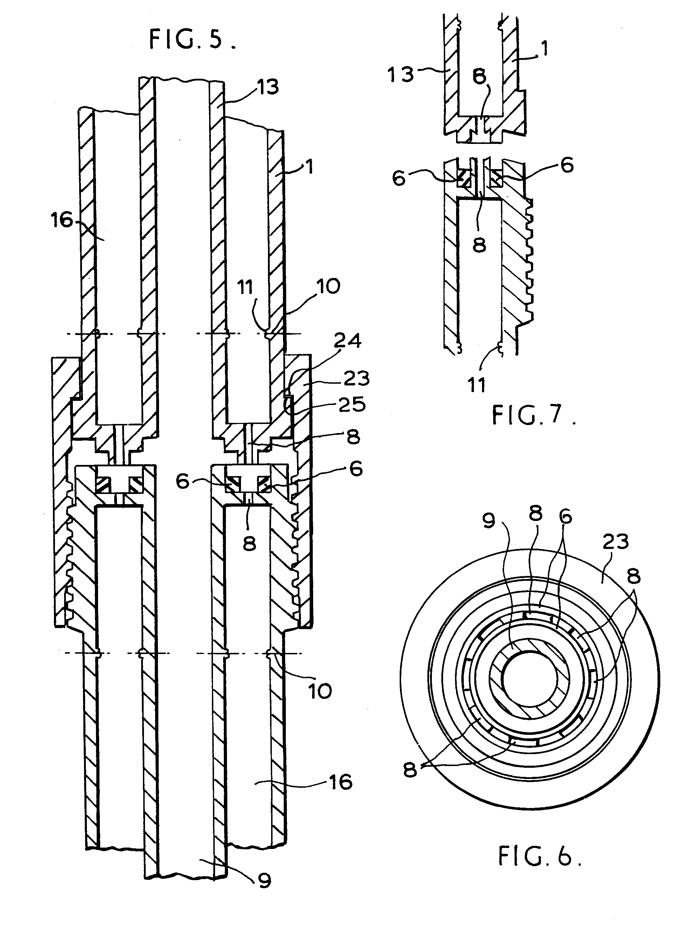

In figure 4 is shown a blanking shoe for closing off the lower end of the inter-tube space 16. This shoe 18 is provided with a box-type coupling having a modified buttress thread 4, a 45° torque shoulder 2 and a 60°

15

metal-to-metal seal 5. Although not shown, a seal could be provided on the shoulder 5 for preventing communication between the lowermost inter-tube space 16 and the steam bore 9. The lower end of the blanking shoe 18 is provided with a threaded box coupling 19 for connection thereto of further tubing.

Figure 3 shows a well head steam injector and vacuum ejector cap 20. The cap 20 is provided with apertures 8 and vacuum seals 6 to co-operate with a channel 7 of the uppermost length of insulated tubing. The lower part of the cap is formed as a pin coupling to connect with a box coupling of the uppermost length. Above the point of connection of this uppermost length is provided a vacuum inlet box 21 which has an internal screw thread connection to a pipe leading to a vacuum pump (not shown). The uppermost part of the cap comprises a box connector 22 for connection to a pipe leading to a steam generator (not shown) or other source of steam.

The invention has thus far been described with reference to the particular embodiment shown. Clearly, any reference to, for example, a box coupling, can be replaced by a reference to a pin coupling, provided that the mating coupling is correspondingly changed.

16

Further, an alternative form of coupling is envisaged which is more particularly shown in Figures 5 to 7. Figure 5 shows a coupling between two lengths of tubing each comprising an outer tube 1 and an inner tube 13 defining between them an annular inter-tube space 16 and the inner tube 13 defining a bore 9 for passage of steam.

The lengths of tube are connected together by means of opposed coupling portions including a collar connector 23. The collar 23 has an internal screw thread at one end to co-operate with an external screw thread at one end of the lengths of tubing. The other end of the collar 23 has an internal shoulder 20 co-operating with an external shoulder 25 of the outer tube 1 of the other length. This length of tubing is thereby rotatable with respect to the collar until the collar is screwed fully home and permits angular adjustments of that length of tubing.

The inter-tube spaces 16 of adjacent lengths of tubing are connected together by means of eight holes 8, although in this embodiment where the tubing is alignable, only one need strictly be provided. Square cross-section annular sealing rings 6 are provided, one each side of the circle on which lie the holes 8. The seals may be of glass filled PTFE and prevent they communication between the vacuum and the steam in the bore 9, or between the vacuum and the atmosphere

17

exterior of the tubing. The ends are so fitted and dimensioned that wherever possible, there is contact between respective faces of each length whereby the best possible seal is ensured.

Figure 7 shows a variant in the connection between inter-tube spaces in which the pathway between the vacuum connecting holes 8 and exterior influences is more serpentine and thereby even beter sealing is attained.

Using a well-known type of vacuum pump, a tubing string embodying the invention may be evacuated at least to a depth of 5,000 feet and possibly deeper.

A vacuum is a extermely good form of heat insulation and therefore the steam is delivered down hole in an optimum condition.

Although the insulated tubing has been described with reference to its use in passing steam down hole it can equally be used to supply any fluid hot or cold. Both inner tube 13 and outer tube 1, especially the inner tube 13, may be pre-stressed to withstand the focus put on it by having a vacuum surrounding its exterior and having steam, possibly pressurised, within its interior. Alternatively, or additionally, stays may

18

be provided between the inner and the outer tubes to increase the strength thereof.

It would also be possible to fill the inter-tube space with some porous but insulating material to impart strength without destroying the heat insulation gained by the agency of the vacuum.

Another embodiment of the invention comtemplates establishing a vacuum within each inter-tube space and sealing the space. This may be carried out during manufacture of the insulating tubing. In this embodiment between adjacent lengths of tubing.

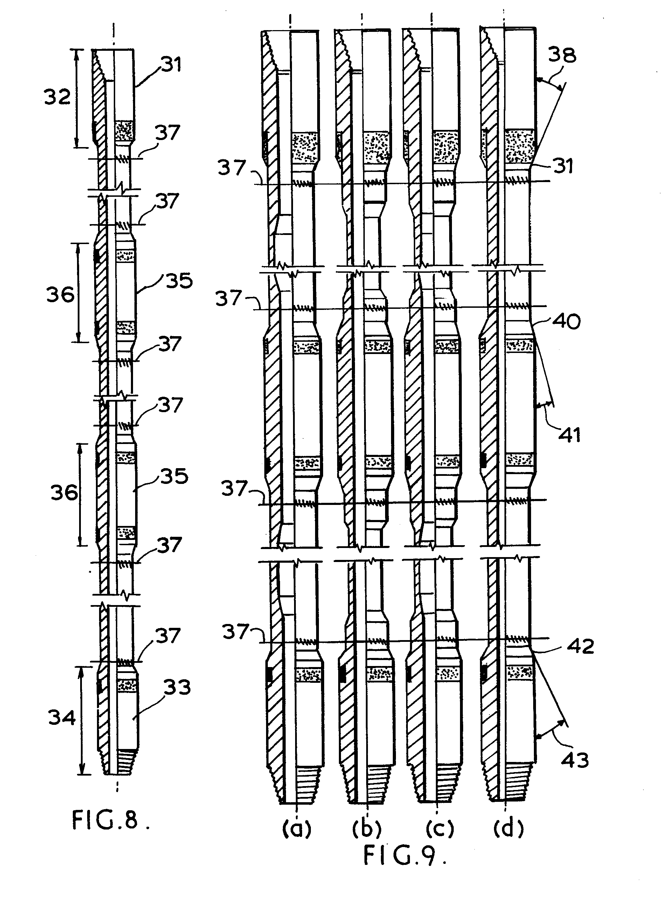

Referring now to the drawings, and particularly to Figure 8, there is shown a drill-pipe having two wear pads attached at intermediate sections thereof. The total length of the drill-pipe is 44'7". The tool joint box 31 has a length 32 which is at least 27". The tool joint pin 33 has a length 34 which is at least 21". Each of the centre tool wear pads 35 has a length 36 which is at least 34". As can be seen, the remaining lengths of pipe are in total 34'11". This length is divided into three parts, which may all be the same, or may be different.

19

The method of assembling the drill-pipe from these three lengths of pipe, two pre-formed centre tool wear pads 35, a tool joint box 31 and a tool joint pin 33, is by friction welding each length of pipe at each of its ends to one of the shaped sections along friction-weld lines 37.

Friction-welding is a process in which either the pipe or one of the shaped sections is gripped in a hydraulically-operated chuck while the other of the components is gripped by hydraulic clamps. The ends of the components are aligned and moved into close contact. The clamps hold fast one component while the chuck, holding the other component, is driven by a motor at a pre-set rotational speed, which is generally less than 500 r.p.m. Axial pressure is applied to generate frictional heat at a controlled rate, and as this occurs the metal is softened and slowly squeezed out from the hot interface to form an upset collar. When pre-determined temperature conditions are established, the rotary spindle is declutched from the main motor, stopped, and the axial pressure increased to forge and hot-work the interface zone to give a high strength solid-state weld.

The accuracy and quality of the welded assembly exceeds the requirements specified in the A.P.I. standards. The joint has a fine-grained structure, a narrow heat affected zone, and excellent chemical properties. The process requires low energy consumption, has 100% metal to metal joints which give parent metal properties. There are no external consumables or protective gases necessary and only the upset collar need be removed by machining, giving a low metal consumption.

The difficulty with the friction-welding process from the point of view of making these drill-pipes, is the length of pipe involved. To add a tool joint box or pin to either end of a long pipe is well-known, and the process involves maintaining the pipe stationary while the tool joint is rotated in the chuck. However, where it is desired to weld a centre tool pad in place, there necessarily comes a point where a long length of pipe is being welded to a long length of pipe which has already been welded to the centre tool pad. It has not hitherto been thought possible to rotate such a length in the hydraulic chuck. It is now realised that by making the chuck hollow the excess length of pipe can pass through the chuck to a safe position behind the friction-welding machine. Thus the chuck has control over the component to be welded at a point near the weld and accuracy of alignment is ensured.

21

Providing there is sufficient room behind the chuck, and the chuck is hollow to such a diameter as to accept any wear pads or tool joints on the pipe as necessary, the length of pipe which can be handled by the process is almost limitless. Since the inital cost of two short lengths of pipe is less than the initial cost of a single pipe of equal length, the method offers great savings in cost by using a number of short pipe lengths. Also, the wear pads may be constructed and machined to their final shape as comparatively short units which are later inserted as parts of the drill-pipe. Again, this offers cost savings as compared to those involved in machining longer lengths of pipe having wear pads on them. Also, the friction-welding process may be used to weld together two dissimilar metals, and therefore, if so desired, the wear pads may be constructed of a different material more suitble for their purpose.

Figure 9 shows four variants of a drill-pipe having a slick-type wear pad at its centre. Such a pipe is conveniently 30'6" long and the measurements for the tool joints and wear pads are the same as those given for similar parts in the pipe shown in Figure 8. As can be seen, the heavy wall section can be made with any desired cross-sectional shape. As shown, the elevator shoulder 39 is angled at an angle 38 which is ideally

0138603

22

18°. The wear pad shoulder 40 is angled at an angle 41 which is also ideally 18°. The pin shoulder 42, however, is arranged at an angle 43 which is 35°.

Another advantage of the method is that the heavy walled and corresponding thinner-walled pipe sections may be achieved in any one of a number of ways. As shown in Figure 9(a), the pipe is internally upset. In figure 9(b) it is externally upset, while in Figure 9(c) it is both internally and externally upset.

Figure 9(d) shows a pipe which has comparatively heavy wall throughout.

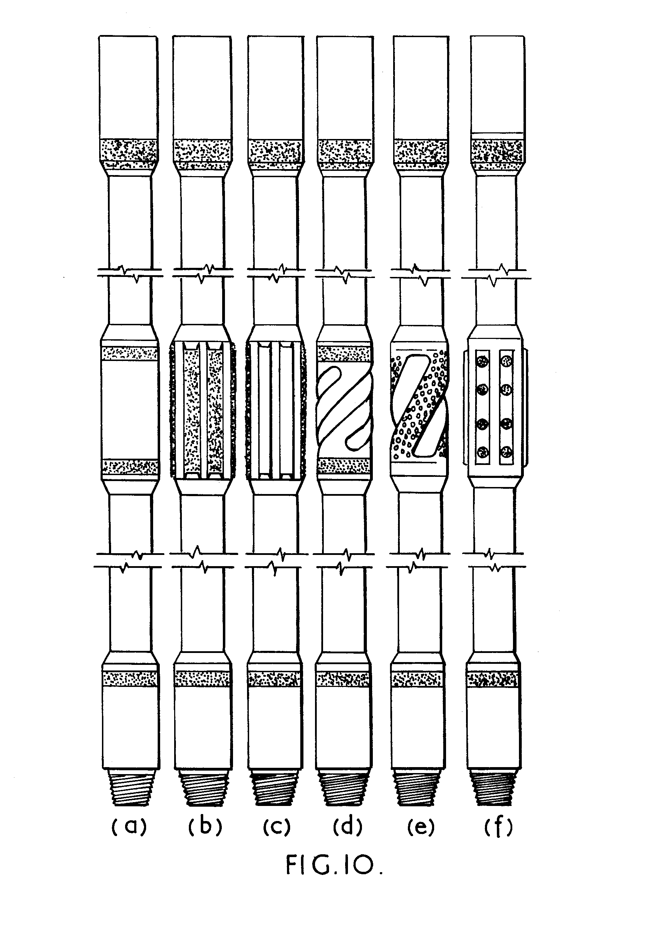

Figure 10 shows various forms of wear pad which can be achieved by the method embodying this aspect of the invention. Figure 10(a) shows a slick-type of wear pad, while that shown in figure 10(b) has a wear pad comprising rib-type carbide compacts. Figure 10(c) shows a wear pad of the rib-face type and figure 10(d) one of the spiral type. Figure 10(e) shows a development of the spiral type where the wear pad has spiral carbide compacts. Figure 10(f) has a centre section which is a replaceable soft rib protector.

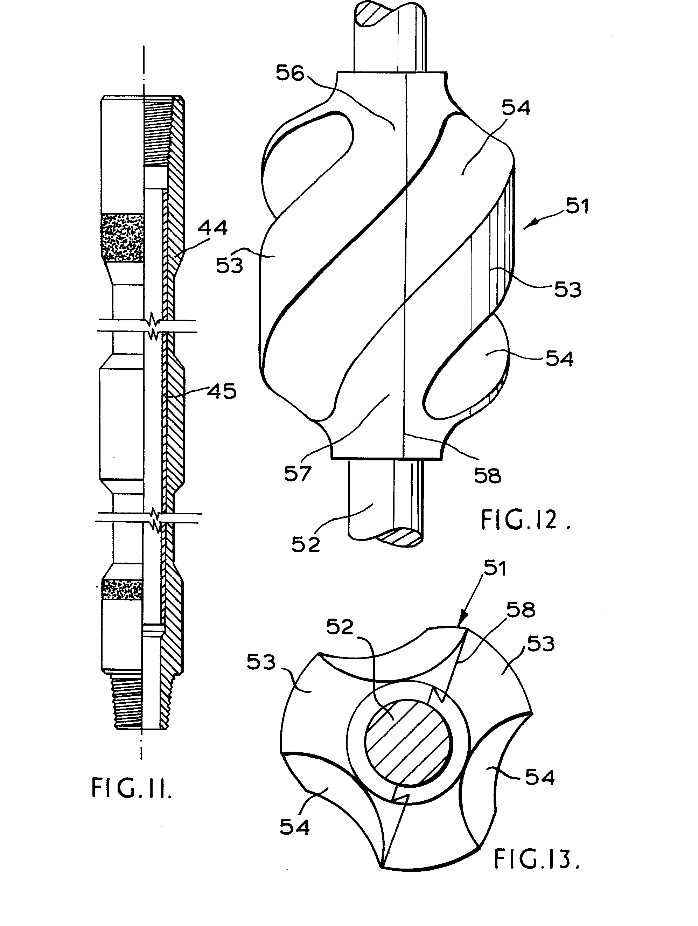

Figure 11 shows a development of the internally upset drill pipe shown in Figure 9(a). In the embodiment illustrated an alloy steel inner tube 44 is inserted into the completed drill pipe under hydraluic pressure until possitively sealed. The annulus formed between the tube 44 and the internally upset portion of pipe is fitted with a vibration dampening layer 45 of polyurethane material. This may be added at an intermediate stage of the inner tube insertion process. Such a pipe is particularly useful in directional drilling.

The method embodying this aspect of the invention has been decribed by reference to insertion of wear pads on drill-pipes. It also extends to other pads and spacing devices on drill-pipes, sucker rods and the like. The friction-welding process gives a join which is as strong as, and is homogenous with the metal itself and thus strains are avodied within the pipe, which is well able to withstand great forces.

The method has been particularly described with reference to friction welding. However, it is to be understood that flash butt welding or induction welding could be used with, in some case, equally good results.

In a further aspect the invention concerns a paraffin scraper.

24

Referring now to Figures 12 to 15 of the drawings, there is shown a paraffin scraper 51 attached to a rod 52. The scraper comprises a body having three blades 53 separated one from another by three channels 54. The blades 53 contact the walls of the production pipe to scrape it clean of paraffin and other solid build-ups. The channels 54 allow oil to flow up past the scraper.

The blades and channels extend helically from one end of the scraper to the other and each encircle a part of the scraper. As can be seen more clearly in Figure 12, a point 56 at one end of one blade occupies the same angular point on the circumference of the body of the scraper as does a point 57 at the other end of the next adjacent blade. In this way, the blades encircle the scraper so that every point on the wall of the piping can be contacted by a part of one of the blades during the regular up and down movement of the sucker rod 52.

The paraffin scraper is made as a two part injection moulding, the two halves being joinable along the line indicated at 58. As can be seen from Figure 13, the two halves are formed with a dovetail to hold them together, although this is not strictly necessary. For injection moulding processes to be successfully applied, it is necessary that the shape moulded does not have undercut edges. The dovetail can be formed by using additional mould pieces, but the complex shape of helical channels 54 has hitherto defied the moulding process. It has been realised that, by making the channels 54 less than semi-circular or equivalently curved and by careful consideration of the positions about the circumfernce which they will occupy, it is possible to injection mould a scraper in two substantially semi-cylindrical halves.

The scraper is preferably made of hard-wearing plastics material. Nylon or polyphenylene sulphide resin have been found to be particularly suitable.

It is intended that the scraper is positioned on a rod by placing one half in contact with the rod and adhering it to the other half. Where dovetails are provided, the second half is slid axially along the rod into engagment with the first half. The two halves are adhered together and each to the rod by means of an adhesive. It has been found that epoxy resins or vinyl ester resins are particularly suitable.

The paraffin scraper embodying this aspect of the present invention is also useful to maintain the sucker or other rod substantially central in the pipe or other bore, even in case where there is no likelihood of paraffin building-up.

26

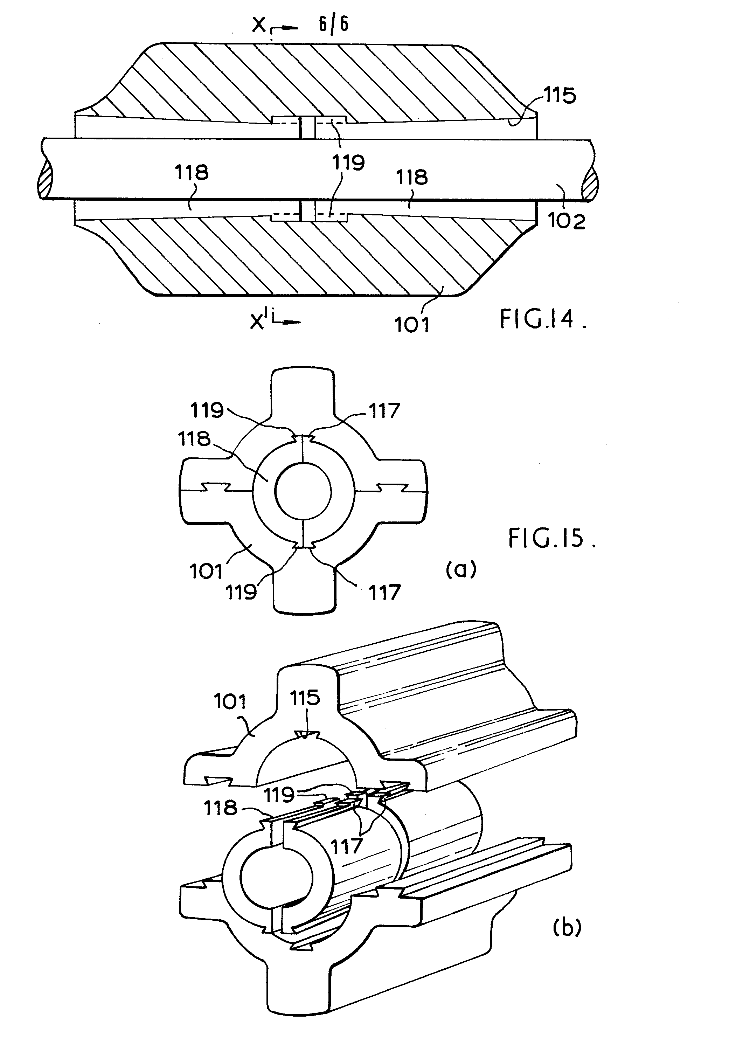

Figures 14 and 15 show a further embodiment of this aspect of the invention including a preferred method of attaching the scraper to the rod.

A scraper 101, of similar design to that illustrated in Figures 12 and 13 is provided, with a central bore 105. The bore 105 has a pair of recesses 117 disposed centrally of the scraper 101.

Nylon inserts 118, having a hollow frusto-conical form are provided to engage within the bore 115 as shown in Figure 14. The inserts 118 are provided for each side of the bore 115, each insert being formed in two mating halves to fit into the bore 115. Each insert 118 also has a pair of dovetail projections 119 which fit within the corresponding recesses 117.

In use, a hydraulic ram is used to force the inserts 118 into the bore 101 one insert 118 being inserted from each end, with the rod 102 in place, so that the projections 119 are forced into the recess 117, the inserts 118 then gripping the bore 105 and the rod 102 thus locking them together.

27

It would, of course, be possible, to prevent rotation of the scraper about the rod and to prevent its translation along the rod, to provide abutments on the rod and corresponding depressions on the interior surface of each half. In the case where the two halves are joined by a sliding together of the dovetail, it may be necessary to impart a certain resilience either to the abutment or to the scraper.

The scraper has been described as having three blades and three channels. It would of course, be possible to vary this number providing that the restrictions on undercut edges were complied with. It is also not necessary for the blades to extend the full length of the scraper. In certain circumstances it might be advantageous if they did not. For example, each blade may be split into two or more parts with cross-channels between channels 54 separating them. It might also be possible to provide the scraper function as a part of some other down hole tool, in which case scrpaer blades need only occupy a short length of the tool.

28

Advantagous embodiments of the invention will be identified from the following paragraphs of advantage:

1. Coupling means for coupling first and second lengths of insulating tubing which include respective inner and outer spaced tubes defining an inter-tube space therebetween, the coupling means comprising respective first and second coupling portions which are coupleable to form an inner tube seal and an outer tube seal which seals are spaced from one another.

2. Coupling means as specified in paragraph 1, wherein a fluid communication path is provided between the inner and outer seals, for connecting the inter-tube space of the first length of tubing to the inter-tube space of the second length of tubing.

3. Coupling means as specified in paragraph 1 or 2, wherein the first and second coupling portions include respective inner and outer tube sections.

4. Coupling means as specified in paragraph 3, wherein the first and second outer tube sections are provided with engageable complimentary threaded portions.

5. Coupling means as specified in paragraph 4, wherein the first coupling portion includes a collar, rotatable relative to the first outer tube section, the collar including a threaded portion and the second outer tube section including a complimentary threaded portion.

6. Coupling means as specified in paragraph 4 or 5, wherein the first inner and outer tube sections are joined together adjacent their ends.

7. Coupling means as specified in paragraph 6, wherein the second inner and outer tubes are joined together adjacent their ends.

8. Coupling means as specified in paragraph 7, wherein the first inner and outer tube sections together form a female connector and the second inner and outer tube sections together form a male connector, which connectors are engageable.

9. Coupling means as specified in any one of the preceding paragraphs, wherein the inner tube seal includes a sealing ring.

10. Coupling means as specified in any one of the preceding paragraphs, wherein the outer tube seal includes a sealing ring.

30

11. An insulating tubing structure including first and second lengths of insulating tubing, each length including respective inner and outer tubes having an inter-tube space therebetween and coupling means as specified in any one of the preceding paragraphs coupling said first and second lengths together.

12. A structure as specified in paragraph 11, wherein the inter-tube space, of said first and second tubes is evacuated.

13. A structure as specified in paragraph 11 or 12, wherein the inter-tube space contains a porous and thermally insulating material.

14. A structure as specified in any one of paragraphs 11 to 13, further comprising a cap for sealing a free end of the tubing structure, the cap including means for connecting a vacuum pump to the inter-tube space.

15. A pipe structure as specified in any one of paragraphs 12 to 14, further comprising a blanking shoe, for attachment to a free end of the pipe structure for closing the inter-tube space at said free end.

16. Thermally insulated fluid transfer tubing comprising first and second tubes arranged one within the other

31

with the space between them being evacuated.

17.  An insulated tubing as specified in paragraph 16, wherein the the first and second tubes constitute a pair of tubes and are connected to an adjacent pair of such tubes to allow fluid to flow within the inner of the tubes and to allow communication of the vacuum along the spacing between the inner and outer tubes.

18.  An insulated tubing comprising two coaxial tubes joined together adjacent their ends and means for coupling two adjacent lengths of such tubing wherein the ends of the respective tubes sealing abut one another and the ends of the respective outer tubes are adapted to engage one another.

19.  An insulated tube as specified in paragraph 18, wherein the inner and outer tubes are joined together at their ends so as to permit communication between adjacent inter-tube spaces.

20.  An insulated tubing as specified in paragraph 18, wherein each length of tubing has a sealed inter-tube space.

21.  An insulated tubing as specified in any of the paragraphs 18 to 20, wherein the inter-tube space is adpated to contain or act as thermal insulation means.

22. An insulated tubing as specified in paragraph 21 wherein the inter-tube space is evacuated.

23. An insulated tubing as specified in any of paragraphs 18 to 22, wherein the outer tubes are correspondingly screw threaded for engagement one with the other.

24 An insultated tube as specified in any of paragraphs 18 to 22, wherein the outer tubes engage one another by means of overlapping portions thereof, said portions being screw threaded.

25. An insulated tubing as specified in paragraph 24, wherein the ends of the outer tubes are provided with pin and box type screw threaded couplings.

26. An insulated tubing as specified in paragraph 24, wherein the outer tubes engage one another by means of a collar engaging a shoulder of one tube and a screw thread on the other tube.

27. An insulated tubing as specified in paragraph 18, wherein an end of the tubing is provided with a annular channel in its end face, said channel communicating with the inter-tube space by at least one aperture.

33

28. An insulated tubing as specified in paragraph 18, wherein the end face of the tube contains at least one aperture communicating with the inter-tube spacing.

29. An insulating tubing as specified in any of paragraphs 16 to 28, wherein the inner and outer tubes are friction welded to a preformed connector at each of their ends.

30. An insulated tubing as specified in paragraph 29, wherein the tubing is provided with a male connector at one end and with a female connector at the other end.

31. A method of making a heavy walled pipe comprising the steps of providing a shaped section of pipe having comparatively thick walls, providing two lengths of pipe having comparatively thin walls, and welding the lengths of pipe to respective ends of said shaped section.

32. A method as specified in paragraph 31, wherein said welding is friction welding.

33. A method as specified in paragraph 31 or 32, comprising the steps of prior to welding the lengths to the shaped section, welding a respective coupling component to one end of each of the lengths of pipe.

34. Apparatus for use in a method as specified in any of paragraphs 31 to 33, wherein the lengths of pipe and shaped section are friction welded together, comprising a friction welding machine having a hollow spindle to accomodate a length of pipe passing therethrough.

35. A paraffin scraper for scraping the inner surface of a pipe comprising a substantially cylindrical body having an oil passage for axial passage of oil and radially outwardly disposed blade means arranged so that the inner surface of the pipe may be scraped around its full circumference by axial movement of the scraper.

36. A scraper as specified in paragraph 35, wherein the blade means includes a helical blade structure.

37. A scraper as specified in paragraph 36, wherein the blade structure includes three substantially parallel helical blades, the oil passage being formed by a respective plurality of helically extending channels disposed between said blades.

38. A scraper as specified in paragraph 37, wherein the blade structure includes three said blades and three respective said channels.

39. A scraper as specified in paragraph 37 or 38, wherein a first end of one of the blades is provided at the same angular position as an opposed end of another of said blades.

40. A scraper as specified in any of the paragraphs 35 to 39, wherein the scraper is formed from first and second mateable parts.

41. A scraper as specified in paragraph 40, wherein the first and second parts are provided with engagement means for engaging the parts together.

42. A scraper as specified in paragraph 41, wherein the engagement means includes corresponding dove tailed joint portions provided on said first and second parts.

43. A scraper as specified in any one of paragraphs 40 to 42, wherein the first and second parts are joined by adhesive.

44. A scraper as specified in any of the paragraphs 35 to 43, wherein the scraper is formed of aluminium.

45. A scraper as specified in any of paragraphs 35 to 43, wherein the scraper is formed of a plastics material.

36

46. A scraper as specified in any of the paragraphs 35 to 45, further comprising an insert, insertable between the body and a rod on which it is located for locking the body relative to the rod.

47. A scraper as specified in paragraph 46, wherein the insert has an axially tapered form and includes a projection, engageable within a recess within the body.

0138603

Claims:

1. Coupling means for coupling first and second lengths of insulating tubing which include respective inner (13) and outer (1) spaced tubes defining an inter-tube space (16) therebetween characterised by the coupling means comprising respective first and second coupling portions (26,27) which are coupleable to form an inner tube seal (6) and an outer tube seal (6) which seals (6) are spaced from one another.

2. An insulating tubing structure including first and second lengths of insulating tubing, each length including respective inner (13) and outer (1) tubes having an inter-tube space (16) therebetween and characterised by coupling means as claimed in claim 1 coupling said first and second lengths together.

3. Thermally insulated fluid transfer tubing comprising first (1) and second (13) tubes arranged one within the other and characterised by the space (16) between them being evacuated.

4. An insulated tubing comprising two coaxial tubes joined together adjacent their ends and means for coupling two adjacent lengths of such tubing wherein the ends of the respective tubes sealing abut one another and the ends of the respective outer tubes are adapted to engage one another.

5. A method of making a heavy walled pipe (40) characterised by the steps of providing a shaped section of pipe (40) having comparatively thick walls, providing two lengths of pipe having comparatively thin walls, and welding the lengths of pipe to respective ends of said shaped section (40).

6. Apparatus for use in a method as claimed in claim 5, characterised in that the lengths of pipe and shaped section (40) are friction welded together and comprising a friction welding machine having a hollow spindle to accomodate a length of pipe passing therethrough.

7. A paraffin scraper (51) for scraping the inner surface of a pipe comprising a substantially cylindrical body having an oil passage (54) for axial passage of oil characterised by radially outwardly disposed blade means (53) arranged so that the inner surface of the pipe may be scraped around its full circumference by axial movement of the scraper.

0138603

1/6

FIG.1.

FIG.2.

FIG.3.

FIG.4.

FIG. 5.

FIG. 7.

FIG. 6.

FIG.8.

FIG.9.

(a) (b) (c) (d)

(a)    (b)    (c)    (d)    (e)    (f)

FIG.10.

0138603

5/6

FIG.11.

FIG.12.

FIG.13.

0138603

X ⟶ 6/6

115

118          119          118

102

X'L ⟶          101          FIG.14.

119          117

118

101

119          117

FIG.15.

(a)

101    115

119

118          117

(b)